Europäisches Patentamt

(19) European Patent Office

Office européen des brevets

(11) Publication number: **0 004 411**
**B1**

## EUROPEAN PATENT SPECIFICATION

(45) Date of publication of patent specification: **05.08.81**

(51) Int. Cl.³: **G 02 F 1/19**

(21) Application number: **79300072.0**

(22) Date of filing: **17.01.79**

(54) Optical device for and method of amplitude modulation of light beam.

(30) Priority: **27.03.78 US 890171**

(43) Date of publication of application:
**03.10.79 Bulletin 79/20**

(45) Publication of the grant of the European patent:
**05.08.81 Bulletin 81/31**

(84) Designated Contracting States:
**DE FR GB**

(56) References cited:
**US - A - 3 291 554**
**US - A - 3 376 092**
**US - A - 3 443 098**
**US - A - 3 559 101**
**IBM TECHNICAL DISCLOSURE BULLETIN, vol. 8,
no. 1, June, 1965
New York US,
W.K. FRENC "Tunnel light modulator" pages
109—110**
**IBM TECHNICAL DISCLOSURE BULLETIN, vol.
21, no. 3, August 1978
New York US
C.A. BROWN et al. "Laser intensity stabilizer",
page 1203.**
**IBM TECHNICAL DISCLOSURE BULLETIN, vol.
12, no. 7 December 1969
New York US
J.M. FLEISCHER "Obtaining extremely small STIR
deflections",
pages 1091—1092**

(73) Proprietor: **International Business Machines
Corporation
Armonk, N.Y. 10504 (US)**

(72) Inventor: **Gordon II, Joseph Grover
184 Castillon Way
San Jose, CA 95119 (US)**
Inventor: **Sincerbox, Glenn Tavernia
1309 Pernich Court
San Jose, CA 95120 (US)**

(74) Representative: **Petersen, Richard Courtenay
IBM United Kingdom Patent Operations Hursley
Park
Winchester Hants. SO21 2JN (GB)**

Courier Press, Leamington Spa, England.

## Optical device for and method of amplitude modulation of light beam

This invention relates to optical devices for and methods of modulation of the amplitude of a light beam.

The present methods of modulating a beam of light include mechanical shutters, electro-optic devices and acousto-optic devices. Mechanical modulators are inherently slow since they require the movement of mechanical parts over distances of the order of millimetres. The electro-optic devices involve means for rotating the polarization state of an incident light beam. This is inherently a high voltage process, of the order of several thousands of volts, which causes complications in the electronics and also results in a slower response.

The acousto-optic modulator operates by deflecting an incident light beam by diffraction from a periodic refractive index variation introduced into an optically transparent material by an acoustic wave. These are inherently small aperture devices because the finite velocity of the acoustic wave requires the light beam to have a small cross section in order for the device to have a fast response time.

U.S. patent specification No. 3,514,183 describes a switchable total internal reflection light deflector which could be used as a light modulator. This deflector has a piezoelectric crystal which is used to flex a glass plate causing its surface to be brought into intimate contact with a prism. The light undergoes frustrated total internal reflection when the plate and the prism are less than $\lambda/50$ apart, that is, of the order of 100 Å. This means they are in substantial contact with one another. The forces of attraction between prism and plate are of such a magnitude that they have to be peeled apart. This attraction causes cold welding of the glass surface and device failure results after a few million cycles. Since the glass plate is forced into and out of optical contact with the prism, the life of the deflector is also limited by the abrasion of the interface surfaces.

U.S. 3,376,092 discloses several optical devices for modulating the amplitude of a light beam. Such devices comprise a first body of optically transparent material having a plane surface, a light beam passing into the first body and undergoing total internal reflection at an interface between the plane surface and a medium having a dielectric constant whose magnitude is less than that of the body, and a second body having a plane surface substantially parallel to and adjacent the plane surface of the first body and being movable by surface separation changing means. The second body is moved to and from a position in optical contact with the first body to frustrate or permit total internal reflection.

The invention seeks to provide a device for and method of modulating the amplitude of a light beam having a moderate cross section while having a fast response time, and using a relatively low voltage. The device may serve as a variable light attenuator.

Accordingly the invention is characterised in that the light beam is of monochromatic linearly polarized light, and in that the second body is made of a material with a negative dielectric constant and is movable without optical contact between the surfaces of the first and second body, whereby the device exhibits minimum reflectivity with the plane surfaces separated by a gap of more than one wave-length of the light, e.g. about one micron.

According to another aspect of the invention, a method of modulating the amplitude of a light beam by the use of such a device, is characterised by the steps of passing the beam of monochromatic linearly polarized light at an angle of incidence into the first body in the form of a glass prism to undergo total internal reflection at the glass prism-gap interface, and of changing the thickness of the gap to change the reflectivity without optical contact between the prism and the second body which has a smooth metal surface at the gap.

One of the advantages of the optical modulator in accordance with this invention is that the size of the beam is immaterial, being limited entirely by the size of the reflecting surface. The beam only needs to be collimated. Another advantage is that this device is applicable over a wide range of optical frequencies. It is only necessary to choose a material with a suitable dielectric function. A further advantage is that a relatively low drive voltage is required, a voltage substantially less than the prior art electro-optical devices.

Optical modulators made in accordance with this invention are useful in most applications where optical modulator or attenuator devices can be used. For example, they may be used in beam addressed memories or displays, optical communication, optical printers, spectrophotometers, and photometers.

The claimed invention may be carried out in the ways described in detail below with reference to the accompanying drawings, in which:—

FIGURE 1 is a partly schematic view of an optical modulator according to this invention; and

FIGURE 2 shows the variations in reflectivity for prior art devices and the optical modulator according to this invention.

An optical modulator 10 in accordance with this invention includes a prism 12 and a substrate 13 having a smooth surface 14. The prism 12 can be of any optically transparent material and have any combination of plane or curved surfaces provided that it have at least one plane surface. The triangular shape prism 12 may be replaced by one of semicylindrical or trapezoidal shape. Suitable prism materials include glass, plastics, and natural or synthetic crystals. The prism 12 has a plane lower surface 16 separated from the smooth surface 14 by a gap 18. The gap 18 is filled with a medium 19 having a dielectric constant less than the prism 12. Air is an example of a suitable medium 19. Medium 19 may be any gas, liquid or compressible solid, so long as the dielectric constant requirement is fulfilled.

The substrate 13 is of a material selected so that the energy in reflected beam 24 is a function of the thickness of the gap. This effect is described by the well known Fresnel equations and arises when the surface 14 has a negative dielectric constant whose magnitude is greater than that of the medium 19. These conditions are usually satisfied by most metals. In some spectral regions certain nonmetallic materials such as semiconductors and organic solids may also satisfy the requirements. Materials which have been tested and work include copper, silver, gold, aluminium and rhodium.

The thickness of the gap is changed by a mechanical device 20, for example, a piezoelectric transducer. Transducers are available which will produce a 1 micron excursion with application of 70 to 80 volts of drive. A beam of linearly polarized collimated monochromatic light 22 is passed into the prism 12 to strike the surface 16 at an angle of incidence $\emptyset$ inside the prism, and is reflected to form beam 24.

The optical modulator is suitable for use with a collimated light beam having a moderate cross section and a fast response time and operational at relatively low voltage. The beam of monochromatic light is passed into the prism at a specific angle of incidence to undergo total internal reflection at the glass prism-gap interface. A change of approximately 1 micron in the thickness of the gap is sufficient to change the reflectivity from greater than 95% to essentially zero. The size of the gap is mechanically adjusted and this mechanical device determines the frequency response of the light modulation.

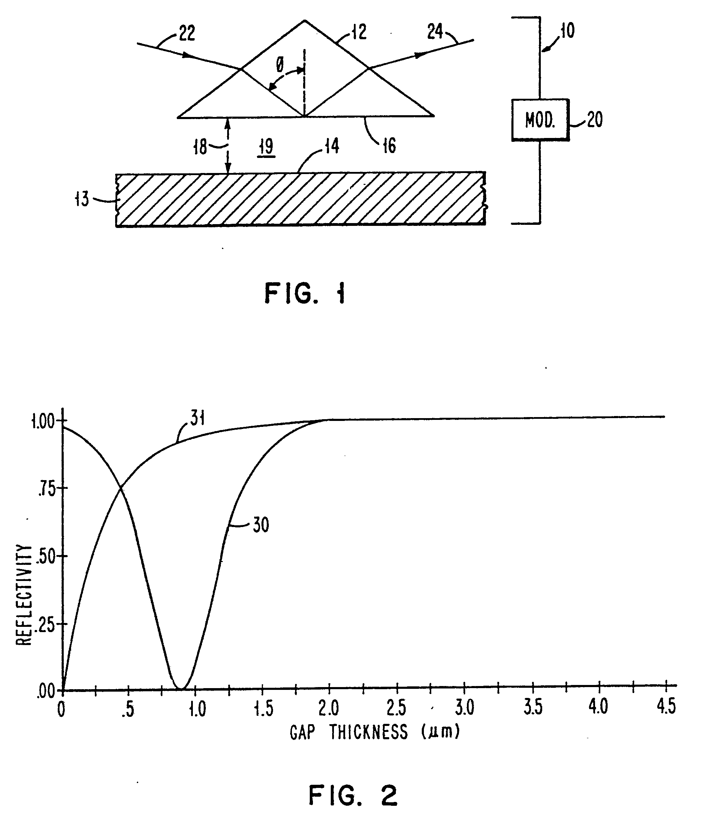

With a device as described above, a typical variation of reflectivity with gap thickness is shown in Figure 2 as curve 30. This is for a glass prism $\varepsilon_p=2.297$, a gap containing air $\varepsilon_g=1.0$ and a silver surface $\varepsilon_s=-16.4-i.54$ ($\varepsilon$=dielectric constant). The wavelength of the incident radiation is 632.8 nm and the angle of incidence $\emptyset$, is 47.13°. As is evident in Fig. 2, a change in the dimensions of the air gap of 1 $\mu$m is sufficient to alter the reflectivity from substantially 100% to zero. In Fig. 2 the curve 31 represents the prior art switchable total internal reflection light deflector described in U.S. patent specification 3,514,183. It is to be noted that the prior art device requires contact, i.e., a substantially zero gap, to undergo frustrated total internal reflection. In contrast, as shown by the curve 30, the optical modulator of example 1 having a glass prism, an air gap and a silver substrate exhibits a minimum reflectivity at a finite distance, i.e., about one micron.

Another embodiment of the optical modulator employs a multiple reflection element replacing prism 12. Multiple interactions would decrease the physical excursion required of the modulating element and hence increase the upper frequency limit and reduce the drive requirements for a given modulation amplitude.

A further embodiment utilizes the above described multiple reflection element in conjunction with a plurality of independent gap modulating elements to permit simultaneous modulation at several frequencies or by several independent signal sources.

## Claims

1. An optical device for modulating the amplitude of a light beam, comprising a first body (12) of optically transparent material having a plane surface (16), a light beam (22) passing into the first body and undergoing total internal reflection at an interface between the plane surface (16) and a medium (19) having a dielectric constant whose magnitude is less than that of the body, and a second body (13) having a plane surface substantially parallel to and adjacent the plane surface (16) of the first body and being movable by surface separation changing means (20), characterised in that the light beam (22) is of monochromatic linearly polarized light, and in that the second body (13) is made of a material with a negative dielectric constant and is movable without optical contact between the surfaces of the first and second body, whereby the device exhibits minimum reflectivity with the plane surfaces (14, 16) separated by a gap (18) of more than one wavelength of the light, e.g. about one micron.

2. A device according to claim 1, in which the first body is a prism having a triangular cross-section.

3. A device according to claim 1, in which the first body is a prism having a semicylindrical shape.

4. A device according to claim 1, 2 or 3, in which the second body is a metal.

5. A device according to claim 4, in which the said second body consists of copper, silver, gold, aluminium or rhodium.

6. a device according to claim 1, 2, 3, 4 or 5, in which the medium is a gas.

7. A device according to claim 6, in which the gase is air.

8. A device according to any preceding claim, in which the separation changing means is a piezoelectric transducer.

9. A method of modulating the amplitude of a light beam by use of the device according to claim 1, characterised by the steps of passing the beam (22) of monochromatic linearly polarized light at an angle of incidence into the first body in the form of a glass prism (12) to undergo total internal reflection at the glass prism-gap interface, and of changing the thickness of the gap (18) to change the reflectivity without optical contact between the prism and the second body which has a smooth metal surface (14) at the gap.

10. A method according to claim 10, in which the gap is filled with air.

## Revendications

1. Dispositif optique pour moduler l'amplitude d'un faisceau luminex, comprenant un premier élément (12) en matière optiquement transparente présentant une surface plane (16), un faisceau lumineux (22) passant dans le premier élément et étant soumis à une réflexion interne totale à un interface entre la surface plane (16) et un milieu (19) présentant une constante diélectrique dont la grandeur est inférieur à celle de l'élément et un deuxième. élément (13) présentant une surface plane pratiquement parallèle et adjacente à la surface plane (16) du premier élément et étant mobile sous la commande de moyens (20) capables de modifier l'intervalle séparant les surfaces planes, caractérisé en ce que:

le faisceau lumineux (22) est composé d'une lumière monochromatique polarisée linéairement, et en ce que,

Le deuxième élément (13) est composé d'une matière présentant une constante diélectrique négative et est mobile sant contact optique entre les surfaces des premier et deuxième éléments,

ce qui permet au dispositif d'offrir une réflexion minimale avec des surfaces planes (14, 16) séparées par un intervalle (18) dont la largeur est supérieure à une longueur d'onde de la lumière, part exemple, une largeur de l'ordre de un micron.

2. Dispositif selon la revendication 1 caractérisé en ce que le premier élément est un prisme de section triangulaire.

3. Dispositif selon la revendication 1, caractérisé en ce que le premier élément est un prisme de forme semicylindrique.

4. Dispositif selon l'une des revendications 1, 2 ou 3, caractérisé en ce que le deuxième élément est en métal.

5. Dispositif selon la revendication 4, caractérisé en ce que ledit deuxième élément est en cuivre, en argent, en or, en aluminium ou en rhodium.

6. Dispositif selon l'une des revendications 1, 2, 3, 4 ou 5, caractérisé en ce que le milieu est un gaz.

7. Dispositif selon la revendication 6, caractérisé en ce que le gaz est de l'air.

8. Dispositif selon l'une quelconque des revendications précédentes, caractérisé en ce que les moyens capables les modifier l'intervalle de séparation sont constitués d'un transducteur piézoélectrique.

9. Procédé de modulation de l'amplitude d'un faisceau lumineux par l'utilisation du dispositif selon la revendication 1, caractérisé en ce qu'il comprend les étapes suivantes:

le passage du faisceau (22) de lumière monochromatique polarisée linéairement suivant un certain angle d'incidence dans le premier élément se présentant sous la forme d'un prisme de verre (12) pour y être soumis à une réflexion intérieure totale à l'interface prisme de verre-intervalle et,

la modification de la largeur de l'intervalle (18) pour modifier la réflectivité sans contact optique entre le prisme et le deuxième élément que présente une surface métallique lisse (14) à l'intervalle.

10. Procédé selon la revendication 10, caractérisé en ce que l'intervalle est rempli d'air.

## Patentansprüche

1. Optische Vorrichtung zum Modulieren der Amplitude eines Lichtstrahls, mit einem ersten Körper (12) aus optisch durchsichtigem Material und einer ebenen Oberfläche (16), mit einem Lichtbündel (22), das in den ersten Körper eintritt und eine Totalreflexion an der Grenzfläche zwischen der ebenen Oberfläche (16) und einem Medium (19) erfährt, dessen Dielektrizitätskonstante kleiner ist als die des Körpers und mit einem zweiten Körper (13), der eine ebene Oberfläche aufweist, die in der Nähe der ebenen Overfläche (16) des ersten Körpers und in wesentlichen parallel zu dieser angeordnet und durch Vorrichtungen (20) zur Änderung des Abstands zwischen den Flächen bewegbar ist, dadurch gekennzeichnet,

daß das Lichtbündel (22) aus monochromatischem, linear polarisiertem Licht besteht und daß der zweite Körper (13) aus einem Material mit negativer Dielektrizitätskonstante besteht und ohne optischen Kontakt zwischen den Oberflächen des ersten und des zweiten Körpers bewegt werden kann, so daß die Vorrichtung ein minimales Reflexionsvermögen aufweist, wenn die ebenen Oberflächen (14, 16) durch einen spalt (18) getrennt sind, die großer ist als eine Lichtwellenlänge, z.B. ungefähr 1 Mikron.

2. Vorrichtung nach Anspruch 1, dadurch gekennzeichnet, daß der erste Körper ein Prisma mit dreieckigem Querschnitt ist.

3. Vorrichtung nach Anspruch 1, dadurch gekennzeichnet, daß der erste Körper ein Prisma mit der Gestalt eines Halbzylinders ist.

4. Vorrichtung nach Anspruch 1, 2 oder 3, dadurch gekennzeichnet, daß der zweite Körper ein Metall ist.

5. Vorrichtung nach Anspruch 4, dadurch gekennzeichnet, daß der genannte zweite Körper aus Kupfer, Silber, Gold, Aluminium oder Rhodium besteht.

6. Vorrichtung nach Anspruch 1, 2, 3, 4 oder 5, dadurch gekennzeichnet, daß das Medium ein Gas ist.

7. Vorrichtung nach Anspruch 6, dadurch gekennzeichnet, daß als Gas Luft verwendet wird.

8. Vorrichtung nach einem der vorstehenden Ansprüche, dadurch gekennzeichnet, daß die Vorrichtung zur Änderung des Abstands ein piezoelektrischer Wandler ist.

9. Verfahren zum Modulieren der Amplitude eines Lichtbündels unter Verwendung der Vorrichtung nach Anspruch 1, gekennzeichnet durch die Schrittfolge: Einführen eines Bündels (22) monochromatischen, linear polarisierten Lichts unter einem Einfallswinkel in den ersten Körper mit der Form eines Glasprismas (12), um an der Grenzfläche Glasprisma-Spalt total reflektiert zu werden und Ändern der Dicke des Spaltes (18), um die Reflektivität zu ändern, ohne daß ein optischer Kontakt zwischen dem Prisma und einem zweiten Körper entsteht, der am Spalt eine ebene Metalloberfläche (14) aufweist.

10. Verfahren nach Anspruch 9, dadurch gekennzeichnet, daß der Spalt mit Luft gefüllt ist.

FIG. 1

FIG. 2

1